# EUROPEAN PATENT SPECIFICATION

(11) **EP 2 891 581 B1**
(45) Date of publication and mention of the grant of the patent: **15.05.2019**
(21) Application number: 13834260.5
(22) Date of filing: 29.07.2013
(51) Int. Cl.: H04L 12/12, H04L 12/40, B60R 16/023

(54) **VEHICLE CONTROL SYSTEM, AND VEHICULAR ELECTRONIC CONTROL UNIT**
FAHRZEUGSTEUERUNGSSYSTEM UND ELEKTRONISCHE FAHRZEUGSTEUEREINHEIT
SYSTÈME DE COMMANDE DE VÉHICULE ET UNITÉ DE COMMANDE ÉLECTRONIQUE DE VÉHICULE

(30) Priority: 31.08.2012 JP 2012190818
(43) Date of publication of application: 08.07.2015
(73) Proprietor: Hitachi Automotive Systems, Ltd., Hitachinaka-shi, Ibaraki 312-8503 (JP)
(72) Inventor: SAKURAI, Kohei, Tokyo 100-8280 (JP); MATSUBARA, Masahiro, Tokyo 100-8280 (JP); NARISAWA, Fumio, Tokyo 100-8280 (JP); OHNO, Atsuhiro, Hitachinaka-shi Ibaraki 312-8503 (JP)
(74) Representative: MERH-IP Matias Erny Reichl Hoffmann Patentanwälte PartG mbB
(86) International application number: PCT/JP2013/070411
(87) International publication number: WO 2014/034345

(56) References cited:
- EP-A1- 1 879 326
- JP-A- H0 774 763
- JP-A- H08 237 286
- JP-A- H10 107 821
- JP-A- 2006 290 162
- JP-A- 2010 136 286
- JP-A- 2011 044 945
- JP-A- 2011 235 770
- US-A1- 2008 300 732

## Description

### Technical Field

The present invention relates to a fail-safe technology for a vehicle control system having a communication network.

### Background Art

Recently, as the regulations on fuel economy of automobiles have been tightened, not only improvement in fuel economy of a power train including an engine or the like but also reduction in power consumption by a vehicle control system which controls a vehicle with an electronic control unit (ECU) is demanded. Since recent automobiles are equipped with approximately 10 to 100 ECUs, power consumption by the vehicle control system is increasing.

In a vehicle control system, ECUs exchange information with each other via a communication network. In order to reduce power consumption, a technique called partial networking which causes individual ECUs to sleep/wake up in a fine-tuned manner via a communication network is disclosed (NPL 1). In this, the ECUs of the vehicle control system are divided into clusters, and an ECU for controlling sleep/wake-up transmits a sleep/wake-up request for each cluster according the control mode and vehicle speed or the like of the vehicle.

Also, as a technique for similarly reducing power consumption by a vehicle control system, PTL 1 discloses a technique in which a master ECU for controlling sleep/wake-up is provided and in which the master ECU determines whether sleep of each slave ECU is possible or not and transmits a sleep request to a slave ECU that can sleep.

Moreover, PTL 2 discloses a method in which only when a certain ECU is permitted by all the other ECUs to set this ECU in a sleep state, this ECU shifts itself to a sleep state.

In EP 1 879 326 A1 a communication network system and a wakeup method for an un-wakeup node is described. A vehicular network communication apparatus detects and wakes up a sleeping network node through transmission of a pseudo-wakeup signal after an initial wakeup fails for one or more nodes in the network,

In JP 2011 044945 A a technology is described for enabling to wake up a node. One of the nodes, constituting a communication system, includes a wakeup potential setting circuit which has a transistor whose emitter is connected to a power source as bus driver and whose base is connected to an output port of a microcomputer. A node under a sleep state detects a potential change through the auxiliary wake up circuits and wakes up the microcomputer.

### Citation List

### Patent Literature

PTL 1: JP-A-3-25046
PTL 2: JP-A-2004-254043

### Non Patent Literature

NPL 1: Partial Networking Deactivation of Inactive ECUs : Appliance, Standardization and Validation, 15th International Congress on Electronic Systems for Motor Vehicles, pp. 137-147, 2011.

### Summary of Invention

### Technical Problem

Since the foregoing vehicle control system performs sleep/wake-up control of the ECUs while the automobile is traveling, it is necessary to cause the vehicle control system to operate in a fail-safe manner even in the event of a failure in the communication network or each ECU. However, this point is not mentioned in any of the foregoing related-art techniques.

In order to realize fail-safes, it is necessary to prevent a certain function from failing to operate when necessary, that is, prevent the ECU executing the function from being in a sleep state. More specifically, it is necessary to prevent two events, that is, failure of a certain ECU to wake up, and sleeping of a certain ECU without a sleep request.

In this respect, according to NPL 1 and PTL 1, when a failure occurs in the ECU for controlling sleep/wake-up or in the communication network and a sleep/wake-up request can no longer be transmitted, the ECU that needs to operate cannot be woken up. Also, according to PTL 2, while the configuration to shift to sleep on the basis of a sleep permission from the other ECUs is provided, there is a possibility of determining that sleep is possible despite the lack of a sleep permission, due to a failure in the ECU itself or the communication network.

In view of the foregoing problems, an object of the invention is to provide a vehicle control system for reducing power consumption by causing individual ECUs to sleep or wake up optimally, in which safety can be secured even in the event of a failure in a communication network or the ECUs.

### Solution to Problem

An electronic control unit for vehicle is an electronic control unit for vehicle which exchanges information with another electronic control unit via a communication network. The electronic control unit for vehicle includes the features of claim 1.

Also, a vehicle control system according to the invention is formed by a plurality of electronic control units including the electronic control unit for vehicle and another electronic control unit which exchanges information with the electronic control unit for vehicle via a communication network.

Moreover, a vehicle control system according to the invention includes a plurality of electronic control units (ECUs) for exchanging information via a communication network, and the plurality of ECUs is divided into clusters. At least one ECU of the plurality of ECUs includes a sleep/wake-up control unit which controls sleep or wake-up of the plurality of ECUs for each of the clusters according to an operating state of a vehicle. Each ECU of the plurality of ECUs includes: a sleep/wake-up shift unit which sleeps or wakes up on the basis of a sleep/wake-up request signal from an electronic control unit having the sleep/wake-up control unit; and a sleep avoidance unit which avoids continuation of sleep or shifting to sleep of the plurality of ECUs when an abnormality occurs in either the plurality of ECUs or the communication network.

The sleep avoidance unit prevents any one ECU of the plurality of ECUs from failing to wake up or prevents any one ECU of the plurality of ECUs from sleeping without a sleep request from the sleep/wake-up control unit, on the basis of an abnormality in the plurality of ECUs or the communication network.

In order to prevent any one ECU of the plurality of ECUs from failing to wake up, the sleep avoidance unit monitors the state of the ECU having the sleep/wake-up control unit, and in the event of an abnormality in this ECU or the communication network, takes over the sleep/wake-up control of this ECU and transmits the sleep/wake-up request signal to the plurality of ECUs. Alternatively, the sleep avoidance unit transmits a wake-up request signal to the plurality of ECUs without taking over the sleep/wake-up control. Also, after the ECU having this sleep avoidance unit receives a wake-up request signal and wake-up by the sleep/wake-up shift unit is complete, the sleep avoidance unit exchanges a wake-up notification between the ECUs of the cluster to which this ECU belongs, and thereby determines whether the ECUs in this cluster have woken up normally or not. If it is determined that an ECU that has not woken up normally exists in the cluster, the sleep avoidance unit transmits a wake-up request signal.

Meanwhile, in order to prevent any one ECU of the plurality of ECUs from sleeping without a sleep request from the sleep/wake-up control unit, the sleep avoidance unit determines, according to the form of a sleep request signal transmitted from the sleep/wake-up control unit, validity of the sleep request signal. Also, when the ECU having this sleep avoidance unit receives a sleep request signal, the sleep avoidance unit exchanges a sleep request reception notification between the ECUs in the cluster to which this ECU belongs. If the ECUs receiving the sleep request are in a predetermined number or more, the sleep avoidance unit permits shifting to sleep. If the predetermined number is not reached, the sleep avoidance unit prohibits shifting to sleep. Moreover, the sleep avoidance unit exchanges an alive signal indicating that the ECU having this sleep avoidance unit is normal, between the ECUs in the cluster to which this ECU belongs, and thereby determines whether the ECUs in the cluster to which this ECU belongs are normal or not. If it is determined that there is an ECU that is not normal, the sleep avoidance unit transmits a wake-up request signal.

### Advantageous Effect of Invention

According to the vehicle control system of the invention, since the sleep avoidance unit is provided, an unintended sleep state due to a failure in the communication network or the ECUs can be avoided and safety of the vehicle control system can be improved.

More specifically, as the sleep avoidance unit monitors the state of the ECU having the sleep/wake-up control unit and takes over the sleep/wake-up control unit in the event of an abnormality in this ECU, failure of the ECU to wake up can be prevented. If the sleep/wake-up control unit is not taken over, an arithmetic processing load and cost that is necessary for the sleep/wake-up control can be made unnecessary simply by transmitting a wake-up request signal. Also, when the completion of wake-up is mutually confirmed between the ECUs in the same cluster, if there is an ECU that is incomplete in wake-up, failure to wake up due to a transitional failure or the like in the communication network can be avoided by retransmitting the wake-up request signal.

Moreover, as the sleep avoidance unit determines validity of a sleep request signal or the ECUs in the same cluster mutually confirms reception of a sleep request signal, erroneous sleep of the ECUs due to a transitional failure or the like in the communication network can be avoided. Even if an ECU sleeps erroneously, the ECU can return to normal operation within a short time by receiving a wake-up request signal from the other ECUs in the cluster to which this ECU belongs.

### Brief Description of Drawings

FIG. 1 is the overall configuration of a vehicle control system according to an embodiment of the invention.
FIG. 2 is an embodiment of a sleep/wake-up request signal.
FIG. 3 is a functional block diagram of an ECU based on Example 1.
FIG. 4 is a functional block diagram of an ECU based on Example 2.
FIG. 5 is a functional block diagram of an ECU based on Example 3.
FIG. 6 is a processing flowchart according to Example 3.
FIG. 7 is a functional block diagram of an ECU based on Example 4.
FIG. 8 is a functional block diagram of an ECU based on Example 5.
FIG. 9 is a processing flowchart according to Example 5.
FIG. 10 is the overall configuration of a vehicle control system according Examples 4 and 5.
FIG. 11 is a functional block diagram of an ECU based on Example 6.
FIG. 12 is a processing flowchart according to Example 6.

### Description of Embodiments

Hereinafter, an embodiment of an electronic control unit for vehicle and a vehicle control system according to the invention will be described on the basis of the drawings.

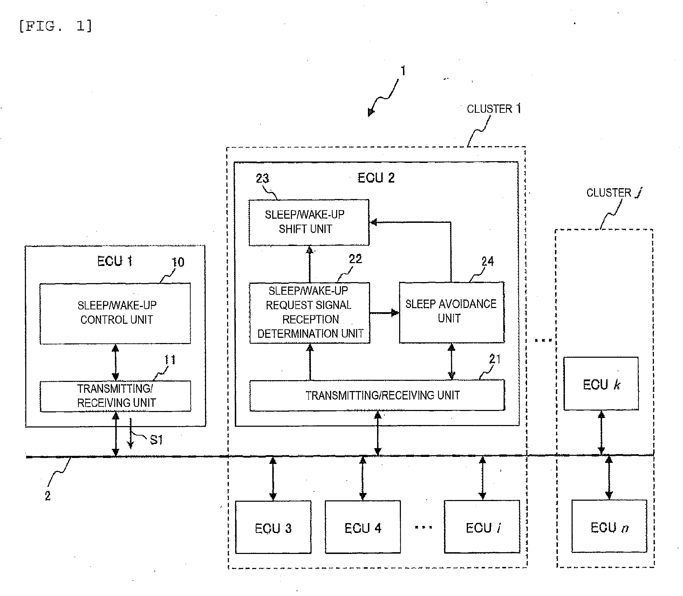

FIG. 1 shows the overall configuration of a vehicle control system. An electronic control system 1 includes a plurality of ECU 1, ECU 2, ... ECU n. These ECUs are connected together via a communication network 2. The ECU 2 to ECU n are grouped by function, for example, into cluster 1 to cluster j.

The ECU 1 has a sleep/wake-up control unit 10 which executes an arithmetic operation to cause the ECU 2 to ECU n to sleep/wake up on a cluster basis, on the basis of information such as the control mode and vehicle speed or the like of a vehicle, and a transmitting/receiving unit 11 which is an interface with the communication network 2. The sleep/wake-up control unit 10 transmits a sleep/wake-up request signal S1 to the communication network 2 via the transmitting/receiving unit 11 at an appropriate timing based on the arithmetic operation.

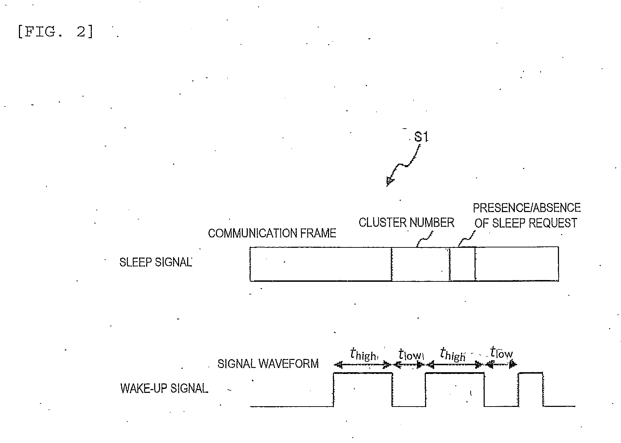

As for the sleep/wake-up request signal S1, for example, a sleep request signal can be generated by providing a data field indicating a cluster number and presence/absence of a sleep request, in a communication frame, and a wake-up request signal can be generated by forming a signal waveform in a predetermined shape (such that a combination of voltage levels High and Low continuing for a predetermined time occurs n times , or the like) for each cluster, as shown in FIG. 2.

Each of the ECU 2 to ECU n has a transmitting/receiving unit i1, a sleep/wake-up request signal reception determination unit i2, a sleep/wake-up shift unit i3, and a sleep avoidance unit i4 (i being 2 to n). Although the internal configuration is shown only for the ECU 2 in FIG. 1, the other ECUs have the similar configuration. In this description, hereinafter, the ECU 2 is illustrated as a representative example and the reference signs for the ECU 2 (i=2) are used.

The sleep/wake-up request signal reception determination unit 22 determines whether the sleep/wake-up request signal S1 received via the transmitting/receiving unit 21 is a sleep/wake-up request to the cluster to which its own ECU belongs or not. If this is to the cluster to which its own ECU belongs, the sleep/wake-up request signal reception determination unit 22 notifies the sleep/wake-up shift unit 23. In the case of a sleep request, the sleep/wake-up shift unit 23 shifts the ECU 2 to a low power consumption mode by lowering the clock frequency or supplying power only to a backup RAM or the like. In the case of a wake-up request, the sleep/wake-up shift unit 23 shifts the ECU 2 from a sleep state in the low power consumption mode to a normal state. This embodiment is characterized in that the sleep avoidance unit 24 is also provided. The sleep avoidance unit 24 has a function of maintaining a sleep state or avoiding shifting to a sleep state, on the basis of a sleep/wake-up request signal reception notification from the sleep/wake-up request signal reception determination unit 22 and information received from the communication network 2. The function of the sleep avoidance unit 24 will be described in detail in each Example. In the ECU 2 in FIG. 1, a part of the exchange of signals between the respective functional blocks may be present or absent, depending on the embodiment.

Next, Example 1 will be described. In the electronic control unit for vehicle according to Example 1, the sleep avoidance unit monitors the state of an electronic control unit having a sleep/wake-out control unit, and in the event of an abnormality in this electronic control unit or the communication network, takes over the sleep/wake-up control of this electronic control unit and transmits the sleep/wake-up request signal to the other electronic control units.

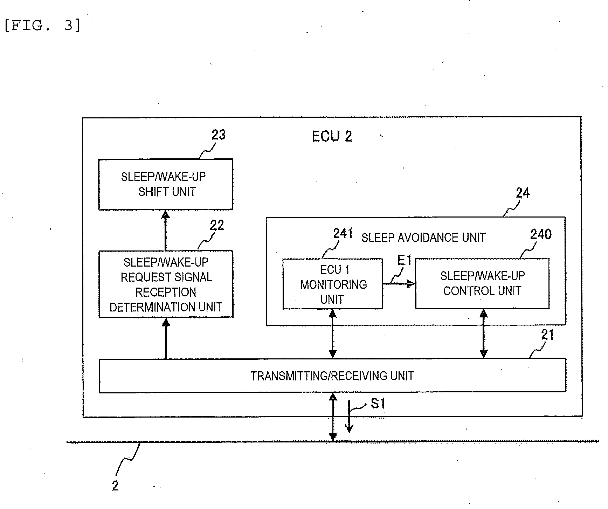

FIG. 3 shows a functional block diagram of the ECU 2 based on Example 1. In this example, the sleep avoidance unit 24 includes an ECU 1 monitoring unit 241 and a sleep/wake-up control unit 240. The ECU 1 monitoring unit 241 monitors the presence/absence of an abnormality in the ECU executing sleep/wake-up control (in this example, the ECU 1). If it is determined that an abnormality occurs in the ECU 1, an ECU 1 abnormality is transmitted to the sleep/wake-up control unit 240 as an ECU 1 monitoring result E1. Thus, the sleep/wake-up control unit 240 takes over the sleep/wake-up control equivalent to the ECU 1 and transmits the sleep/wake-up request signal S1 to the other ECUs in the system.

Several methods are considered as methods for monitoring the ECU 1 by the ECU 1 monitoring unit 241 of the ECU 2. Whether the ECU 1 is normal or not can be determined by methods such as periodically transmitting an alive signal with a sequential number from the ECU 1 and confirming at the ECU 2 that the sequential number changes as determined in advance, or periodically sending a certain problem form the ECU 2 to the ECU 1 and confirming that a predetermined arithmetic result is returned from the ECU 1. Also, in this example, since the sleep/wake-up control unit 240 equivalent to the ECU 1 is provided, whether a predetermined sleep/wake-up signal is transmitted can be monitored as well. Moreover, in the case where the vehicle control system is a time-triggered system, for example, where the communication network 2 is a time-triggered network, the transmission timing of the sleep/wake-up signal from the ECU 1 can be decided at the time of designing. Therefore, the reception timing of the sleep/wake-up signal can be learned without using the sleep/wake-up control unit 240, and the ECU 1 can be monitored using this information.

Next, Example 2 will be described. In the electronic control unit for vehicle according to Example 2, the sleep avoidance unit monitors the state of an electronic control unit having a sleep/wake-out control unit, and in the event of an abnormality in this electronic control unit or the communication network, transmits a wake-up request signal to the other electronic control units.

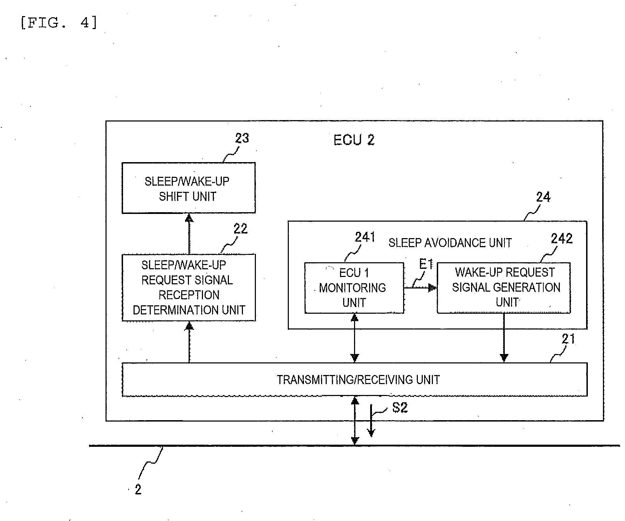

FIG. 4 shows a functional block diagram of the ECU 2 based on Example 2. The sleep avoidance unit 24 in this example includes an ECU 1 monitoring unit 241 and a wake-up request signal generation unit 242. The function of the ECU 1 monitoring unit 241 is as described above . The wake-up request signal generation unit 242 transmits a wake-up request signal S2 to all the ECUs in the system or an ECU that is necessary for securing predetermined safety, if an ECU 1 abnormality is received as an ECU 1 monitoring result E1 from the ECU 1 monitoring unit 241.

In Example 2, since takeover of the sleep/wake-up control equivalent to the ECU 1 as in Example 1 is not carried out, it is not necessary to obtain necessary information for sleep/wake-up control and perform arithmetic operation based on this. Thus, the arithmetic processing load and cost of the ECU 2 can be reduced. The other ECUs in the system can wake up in response to the wake-up request signal S2. After the occurrence of an abnormality in the ECU 1, safety of the system can be secured though fine-tuned sleep/wake-up control cannot be carried out.

In Examples 1 and 2, the ECU that monitors the ECU 1 needs to be constantly in the normal state without shifting to a sleep state, during the operation of the system. As methods for realizing this, a method in which the ECU 2 does not belong to any cluster and is not allowed to sleep during the operation of the system, and a method in which a plurality of ECUs having an ECU 1 monitoring unit is provided and in which these ECUs are arranged in different clusters so that, at any time, one of the ECUs having the ECU 1 monitoring unit is in the normal state, or the like, can be considered. Also, the ECU that carries out sleep/wake-up control, to be a monitoring target, need not be fixed to the ECU 1. For example, if it is necessary to switch ECUs to carry out sleep/wake-up control, the ECU that carries out monitoring and the ECU as the monitoring target may be switched as well.

Next, Example 3 will be described. In the electronic control unit for vehicle according to Example 3, after a wake-up request signal is received and wake-up by the sleep/wake-up shift unit is complete, the sleep avoidance unit exchanges a wake-up notification with the other electronic control units and thereby determines whether the other electronic control units have woken up normally or not. Also, after a wake-up request signal is received and wake-up by the sleep/wake-up shift unit is completed, when the sleep avoidance unit exchanges a wake-up notification with the other electronic control units and there is an electronic control unit that has not woken up normally, the sleep avoidance unit transmits a wake-up request signal at least to this electronic control unit.

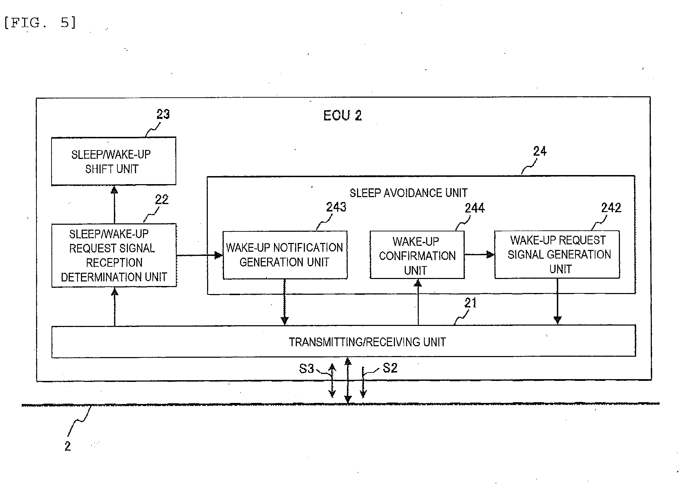

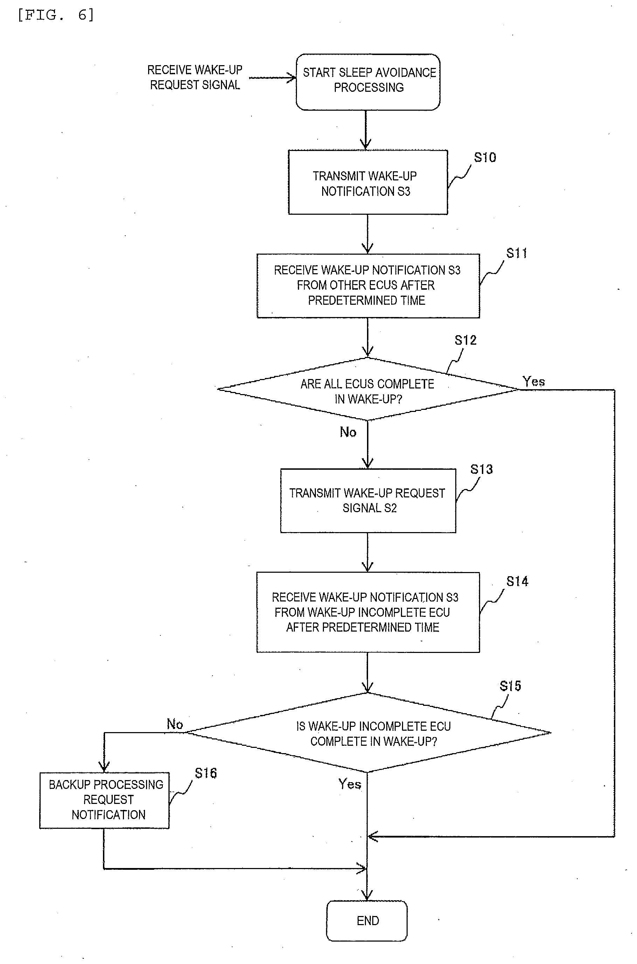

FIG. 5 shows a functional block diagram of the ECU 2 based on Example 3. The sleep avoidance unit 24 in this example includes a wake-up notification generation unit 243, a wake-up confirmation unit 244, and a wake-up request signal generation unit 242. The operation of the sleep avoidance unit 24 in this example is described in detail, using the processing flowchart of FIG. 6 as well. The processing flows shown in FIG. 6 and onward may be realized in the form of hardware, software, or both of them.

As a wake-up request signal reception notification is received from the sleep/wake-up request signal reception determination unit 22, the processing of the sleep avoidance unit starts. The sleep avoidance unit may also be configured to confirm whether a wake-up request signal reception notification arrives periodically from the sleep/wake-up request signal reception determination unit 22 and start this processing if the notification arrives. At the time of executing this processing, the wake-up processing of the ECU 2 is complete and the ECU 2 has shifted to the normal state.

In the processing flowchart of FIG. 6, the sleep avoidance unit 24 first generates a wake-up notification S3 at the wake-up notification generation unit 243 and transmits this in S10, in order to notify the other ECUs in the cluster to which its own ECU belongs that its own ECU has woken up in S10. Since the other ECUs execute the similar processing, the wake-up confirmation unit 244 carries out reception processing of the wake-up notifications S3 from the other ECUs after a predetermined time (S11) and confirms whether all the ECUs in the cluster to which its own ECU belongs have woken up or not (S12) . If the wake-up of all the ECUs is complete, the system can operate normally. Therefore, this processing ends.

If the wake-up of all the ECUs is not complete in S12, that is, if the wake-up notification S3 cannot be received from a part of the ECUs, there is a possibility that these ECUs are failing to receive the wake-up request signal from the ECU 1, because of a transitional failure or the like in the communication network 2 due to a noise or the like. Therefore, a wake-up request signal S2 generated by the wake-up request signal generation unit 242 is transmitted (S13). In S14, reception processing of the wake-up notification S3 from the wake-up incomplete ECU is carried out after a predetermined time. In S15, whether this is successfully received normally or not is confirmed. If it is successfully received, that is, if it can be determined that the wake-up of the wake-up incomplete ECU is complete, this processing ends. If it cannot be received, there is a possibility that the ECU has a permanent failure, for example, an abnormality in power supply or the like, and cannot wake up. Therefore, in S16, the defect of this ECU is reported, and if control without this ECU can be performed, a backup processing request notification for executing backup processing is issued.

In the case of No in S15, the processing may return to S13 again to attempt wake-up a plurality of times, and if wake-up cannot be achieved even then, the processing may shift to S16 for the first time. Also, the processing of S14 and onward may be configured to be executed by the ECU 1.

According to this example, the completion of wake-up is confirmed mutually between the ECUs in the same cluster or by the ECU 1, and the wake-up request signal is retransmitted if there is an ECU that is incomplete in wake-up. Thus, a failure to wake up due to a transitional failure or the like in the communication network 2 can be avoided and safety of the vehicle control system can be improved.

Next, Example 4 will be described. In the electronic control unit for vehicle according to Example 4, the sleep avoidance unit outputs a sleep shift permission notification to the sleep/wake-up shift unit when a sleep request signal transmitted from the sleep/wake-up control unit is received a predetermined number of times within a predetermined time.

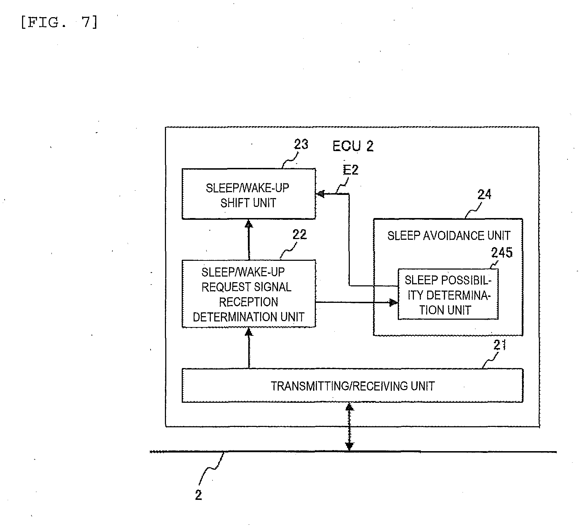

FIG. 7 shows a functional block diagram of the ECU 2 based on Example 4. The sleep avoidance unit 24 in this example includes a sleep possibility determination unit 245. After receiving a sleep request signal reception notification from the sleep/wake-up request signal reception determination unit 22 and determining whether sleep is possible or not, the sleep possibility determination unit 245 transmits a sleep possibility determination result E2 to the sleep/wake-up shift unit 23. The sleep/wake-up shift unit 23 defers the shifting to a sleep state until receiving the sleep possibility determination result E2 from the sleep possibility determination unit 245, even after the reception of the sleep request signal reception notification from the sleep/wake-up request signal reception determination unit 22, and shifts to a sleep state only if the sleep possibility determination result E2 shows that it is possible.

The sleep possibility determination unit 245 determines the validity of the sleep request signal. For example, in order prevent the ECU 2 from erroneously recognizing that the sleep request signal has arrived though the sleep request signal is not sent from the ECU 1 due to a transitional failure or the like in the communication network 2, it is conceivable that the ECU 1 is configured to transmit the sleep request signal a plurality of times. In this case, the sleep possibility determination unit 245 determines whether the sleep request signal is received a predetermined number of times within a predetermined time. Also, as another example of implementing validity determination, it is conceivable that the sleep request signal is encoded or an identifier that changed according to a predetermined rule is added to the sleep request signal, in order to avoid the occurrence of shifting to an intended sleep state due to injection of false sleep request signal. In this case, the sleep possibility determination unit 245 determines whether the sleep request signal is true or false, by decoding the sleep request signal or confirming the added identifier.

Next, Example 5 will be described. In the electronic control unit for vehicle according to Example 5, when a sleep request signal is received, the sleep avoidance unit exchanges a sleep request reception notification with the other electronic control units and thereby determines whether sleep is possible or not. Also, if the electronic control units receiving the sleep request signal are in a predetermined number or more on the basis of the sleep request reception notifications, the sleep avoidance unit outputs a sleep shift permission notification to the sleep/wake-up shift unit. If the predetermined number is not reached, the sleep avoidance unit outputs a sleep shift prohibition notification to the sleep/wake-up shift unit.

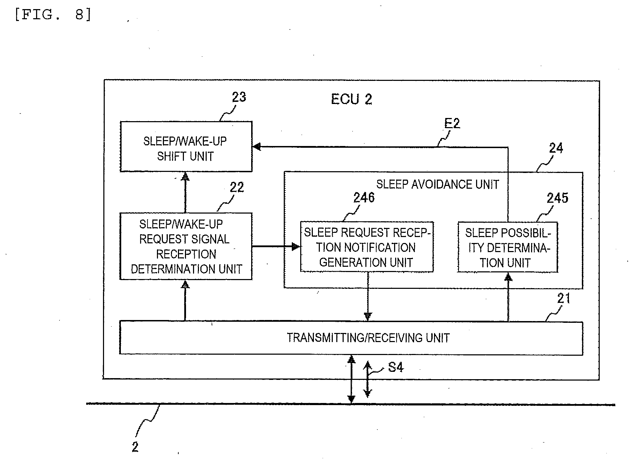

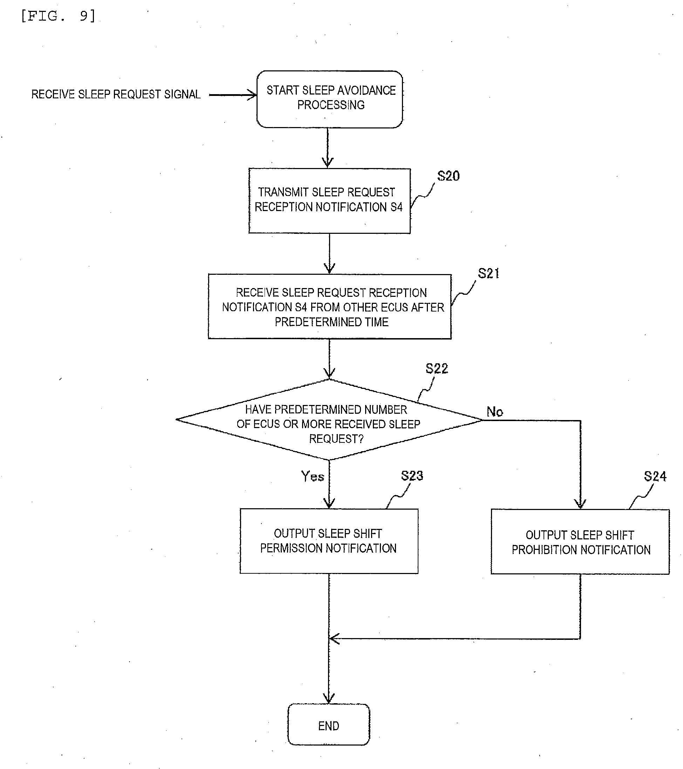

FIG. 8 shows a functional block diagram of the ECU 2 based on Example 5. The sleep avoidance unit 24 in this example includes a sleep request reception notification generation unit 246 and a sleep possibility determination unit 245. This example is another example of the method for preventing the ECU 2 from erroneously recognizing that a sleep request signal has arrived though the sleep request signal is not sent from the ECU 1 due to a transitional failure or the like in the communication network 2, as described above. The operation of the sleep avoidance unit 24 in this example is described in detail, using the processing flowchart of FIG. 9 as well.

As a sleep request signal reception notification is received from the sleep/wake-up request signal reception determination unit 22, the processing of the sleep avoidance unit starts. The sleep avoidance unit may also be configured to confirm whether a sleep request signal reception notification arrives periodically from the sleep/wake-up request signal reception determination unit 22 and start this processing if the notification arrives.

In the processing flowchart of FIG. 9, the sleep avoidance unit 24 first generates a sleep request reception notification S4 at the sleep request reception notification generation unit 246 and transmits this in S20, in order to notify the other ECUs in the cluster to which its own ECU belongs that its own ECU has received a sleep request signal. Since the other ECUs execute the similar processing, the sleep possibility determination unit 245 performs reception processing of the sleep request reception notification S4 from the other ECUs after a predetermined time (S21) and determines whether a predetermined number of ECUs or more in the cluster to which its own ECU belongs have received a sleep request or not (S22). If the ECUs receiving a sleep request are in a predetermined number or more, a sleep shift permission notification is transmitted to the sleep/wake-up shift unit 23 as a sleep possibility determination result E2 in S23 and this processing ends. If the number of the ECUs receiving a sleep request is less than a predetermined number, a sleep shift prohibition notification is transmitted in S24 and this processing ends.

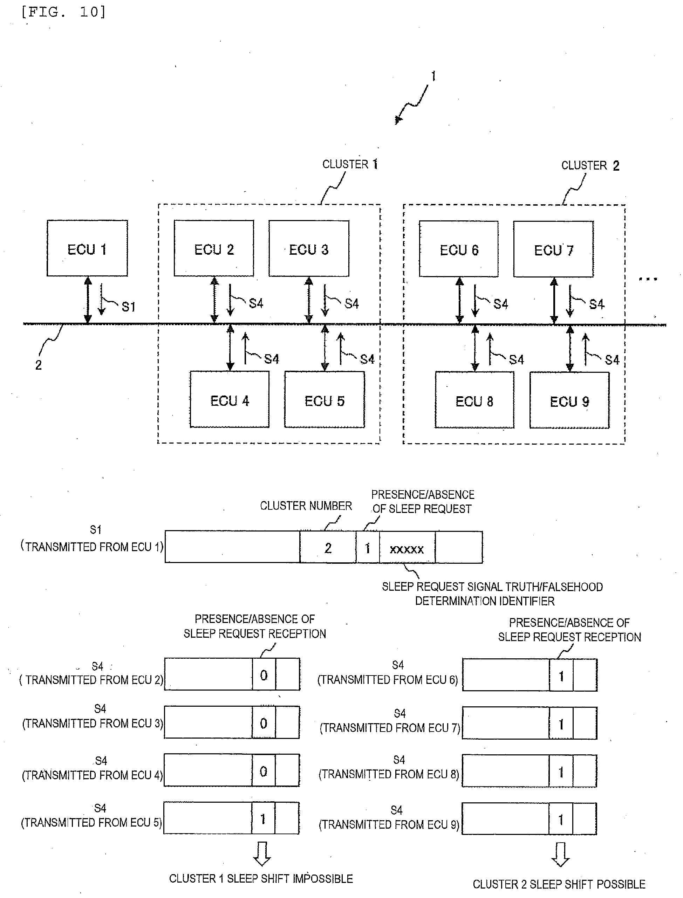

An application example based on Example 5 will be described, using FIG. 10. The vehicle control system of FIG. 10 includes nine ECUs of ECU 1 to ECU 9. The ECU 2 to the ECU 5 belong to a cluster 1. The ECU 6 to the ECU 9 belong to a cluster 2. The ECU 1 transmits a sleep request signal S1 to the cluster 2. In FIG. 10, the sleep request signal S1 includes an identifier for determining whether the foregoing sleep request signal is true or false, in addition to data representing a cluster number and the presence/absence of a sleep request. A sleep request presence/absence bit of 1 defines that there is a sleep request. In this example, it is assumed that the ECU 5 belonging to the cluster 1 erroneously recognizes this sleep request signal S1 as a sleep signal to the cluster 1, due to a transitional communication failure or the like.

In this case, the ECUs in the cluster 2 transmit a sleep request reception notification S4 with a sleep request reception presence/absence bit of 1 (1 expressing the presence of a sleep request reception) according to the processing flow of FIG. 9. Since all the four ECUs have the sleep request reception presence/absence bit of 1, shifting to a sleep state is permitted. Meanwhile, in the cluster 1, only the ECU 5 transmits a sleep request reception notification S4 with a sleep request reception presence/absence of 1, while the other three ECUs transmit a sleep request reception notification S4 with a sleep request reception presence/absence bit of 0, for example, in periodical processing, because these ECUs do not recognize that a sleep request signal is received. Therefore, for example, by making a decision by majority of the four sleep request reception notifications S4, it becomes clear that a sleep request signal is not transmitted, and shifting to a sleep state is prohibited. Thus, the ECU 5 can avoid erroneous sleep .

Next, Example 6 will be described. In the electronic control unit for vehicle according to Example 6, the sleep avoidance unit exchanges an alive signal indicating normality with the other electronic control units and thereby determines whether the other electronic control units are normal or not. If it is determined that there is an electronic control unit that is not normal, the sleep avoidance unit transmits a wake-up request signal at least to this electronic control unit.

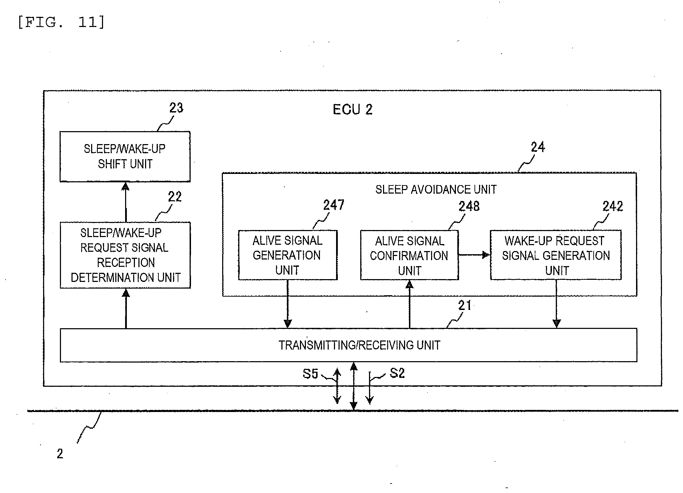

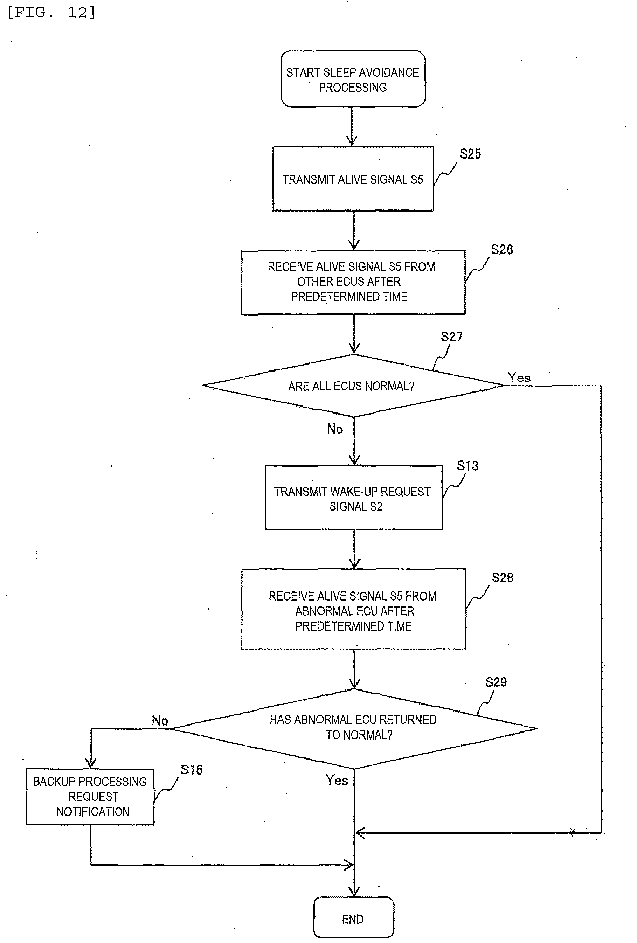

FIG. 11 shows a functional block diagram of the ECU 2 based on Example 6. The sleep avoidance unit 24 in this example includes an alive signal generation unit 247, an alive signal confirmation unit 248, and a wake-up request signal generation unit 242. The operation of the sleep avoidance unit 24 in this example is described in detail, using the processing flowchart of FIG. 12 as well.

It is assumed that the sleep avoidance processing in this example is executed periodically. First, the alive signal generation unit 247 generates an alive signal S5 and transmits this in S25, in order to notify the other ECUs in the cluster to which its own ECU belongs that its own ECU is normal. Since the other ECUs execute the similar processing, the alive signal confirmation unit 248 carries out reception processing of the alive signals S5 from the other ECUs after a predetermined time (S26) and confirms whether the alive signal S5 is transmitted from all the ECUs in the cluster to which its own ECU belongs, that is, whether all the ECUs are normal or not (S27) . If the all the ECUs are normal, this processing ends.

If not all the ECUs are normal in S27, that is, if the alive signal S5 cannot be received from a part of the ECUs, a wake-up request signal S2 generated by the wake-up request signal generation unit 242 is transmitted (S13), in order to attempt wake-up of this ECU. In S28, reception processing of the alive signal S5 from this ECU is carried out after a predetermined time. In S29, whether this is successfully received normally or not is confirmed. If it is successfully received, that is, if it can be determined that this ECU is complete in wake-up and has returned to the normal operation, this processing ends. If it cannot be received, there is a possibility that this ECU has a permanent failure, for example, an abnormality in power supply or the like, and cannot wake up. Therefore, in S16, the defect of this ECU is reported, and if control without this ECU can be performed, a backup processing request notification for executing backup processing is issued.

According to Examples 4 to 6, since the sleep possibility determination unit determines the validity of a sleep request signal, or the reception of a sleep request signal is mutually confirmed between the ECUs in the same cluster, erroneous sleep of the ECUs due to a transitional failure or the like in the communication network 2 can be avoided. Even if an ECU erroneously sleeps, the ECU can return to the normal operation in a short time by receiving a wake-up request signal from the other ECUs in the cluster to which this ECU belongs.

By suitably combining the respective examples described above, safety of the vehicle control system can be improved further. Such examples, too, are included in embodiments of the invention.

Also, in the above embodiment, a vehicle control system in which a plurality of electronic control units is divided into clusters and controlled on a cluster basis is described as an example. However, this is not limiting and a system in which a plurality of electronic control units is not divided into clusters may also be employed.

### Reference Signs List

1 ... vehicle control system, 2 ... communication network, 10 ... sleep/wake-up control unit, 11 ... transmitting/receiving unit of ECU 1, 21 ... transmitting/receiving unit of ECU 2, 22 ... sleep/wake-up request signal reception determination unit of ECU 2, 23 ... sleep/wake-up shift unit of ECU 2, 24 ... sleep avoidance unit of ECU 2, 241 ... ECU 1 monitoring unit of ECU 2, 242 ... wake-up request signal generation unit of ECU 2, 243 ... wake-up notification generation unit of ECU 2, 244 ... wake-up confirmation unit of ECU 2, 245 ... sleep possibility determination unit of ECU 2, 246 ... sleep request reception notification generation unit of ECU 2, 247 ... alive signal generation unit of ECU 2, 248 ... alive signal confirmation unit of ECU 2, S1 ... sleep/wake-up request signal, S2 ... wake-up request signal, S3 ... wake-up notification, S4 ... sleep request reception notification, S5 ... alive signal, E1 ... ECU 1 monitoring result, E2 ... sleep possibility determination result

## Claims

1. An electronic control unit for vehicle which exchanges information with another electronic control unit via a communication network (2),
the electronic control unit for vehicle comprising: a sleep/wake-up shift unit (23) which sleeps or wakes up on the basis of a sleep/wake-up request signal from an electronic control unit having a sleep/wake-up control unit (10) for controlling sleep or wake-up according to an operating state of a vehicle; and a sleep avoidance unit (24) which avoids continuation of sleep or shifting to sleep when an abnormality occurs in either the another electronic control unit or the communication network (2), wherein
the sleep avoidance unit (24) prevents failure to wake up in the event of an abnormality in the another electronic control unit or the communication network (2), **characterized in that** the sleep avoidance unit (24) monitors the state of the electronic control unit having the sleep/wake-up control unit (10), and in the event of an abnormality in the electronic control unit or the communication network (2), takes over the sleep/wake-up control of the electronic control unit and transmits the sleep/wake-up request signal to the another electronic control unit.

2. The electronic control unit for vehicle according to claim 1, wherein
the sleep avoidance unit (24) prevents sleep without a sleep request from the sleep/wake-up control unit (10) in the event of an abnormality in the another electronic control unit or the communication network (2).

3. The electronic control unit for vehicle according to claim 1, wherein
after a wake-up request signal is received and wake-up by the sleep/wake-up shift unit (23) is complete, the sleep avoidance unit (24) exchanges a wake-up notification with the another electronic control unit and thereby determines whether the another electronic control unit has woken up normally or not.

4. The electronic control unit for vehicle according to claim 1, wherein
after a wake-up request signal is received and wake-up by the sleep/wake-up shift unit (23) is complete, the sleep avoidance unit exchanges a wake-up notification with the another electronic control unit, and when there is an electronic control unit that has not woken up normally, transmits a wake-up request signal at least to this electronic control unit.

5. The electronic control unit for vehicle according to claim 2, wherein
the sleep avoidance unit (24) outputs a sleep shift permission notification to the sleep/wake-up shift unit (23) when a sleep request signal transmitted from the sleep/wake-up control unit is received a predetermined number of times within a predetermined time.

6. The electronic control unit for vehicle according to claim 2, wherein
the sleep avoidance unit (24) outputs a sleep shift permission notification to the sleep/wake-up shift unit (23) on the basis of a result of decoding a sleep request signal encoded by the sleep/wake-up control unit (10).

7. The electronic control unit for vehicle according to claim 2, wherein
the sleep avoidance unit (24) outputs a sleep shift permission notification to the sleep/wake-up shift unit (23) on the basis of a result of confirming an identifier added to a sleep request signal on the basis of a predetermined rule by the sleep/wake-up control unit (10).

8. The electronic control unit for vehicle according to claim 2, wherein
when a sleep request signal is received, the sleep avoidance unit (24) exchanges a sleep request reception notification with another electronic control unit and thereby determines whether sleep is possible or not.

9. The electronic control unit for vehicle according to claim 8, wherein
if the electronic control unit receiving the sleep request signal is in a predetermined number or more on the basis of the sleep request reception notification, the sleep avoidance unit (24) outputs a sleep shift permission notification to the sleep/wake-up shift unit (23), and if the predetermined number of not reached, the sleep avoidance unit (24) outputs a sleep shift prohibition notification to the sleep/wake-up shift unit (23).

10. The electronic control unit for vehicle according to claim 2, wherein
the sleep avoidance unit (24) exchanges an alive signal indicating normality with another electronic control unit and thereby determines whether another electronic control unit is normal or not, and if it is determined that there is an electronic control unit that is not normal, the sleep avoidance unit transmits a wake-up request signal at least to this electronic control unit.

11. A vehicle control system comprising a plurality of electronic control units including the electronic control unit for vehicle according to claim 1 and another electronic control unit which exchanges information with the electronic control unit for vehicle via a communication network (2).

12. The vehicle control system according to claim 11, wherein the plurality of electronic control units is divided into clusters,
at least one of the electronic control units in each cluster includes the sleep/wake-up control unit (10), and
each electronic control unit in each cluster includes the sleep/wake-up shift unit (23) and the sleep avoidance unit (24).

## Patentansprüche

1. Elektronische Steuereinheit für ein Fahrzeug, die Informationen mit einer weiteren elektronischen Steuereinheit über ein Kommunikationsnetz (2) austauscht, wobei
die elektronische Steuereinheit für ein Fahrzeug Folgendes umfasst: eine Schlaf/Aufwach-Umschalteinheit (23), die auf der Grundlage eines Schlaf/Aufwach-Anforderungssignals von einer elektronischen Steuereinheit, die eine Schlaf/Aufwach-Steuereinheit (10) zum Steuern des Schlafs oder des Aufwachens gemäß einem Betriebszustand eines Fahrzeugs besitzt, schläft oder aufwacht; und eine Schlafvermeidungseinheit (24), die die Fortsetzung von Schlaf oder ein Umschalten zum Schlaf verhindert, wenn in der elektronischen Steuereinheit oder dem Kommunikationsnetz (2) eine Anomalie auftritt, wobei
die Schlafvermeidungseinheit (24) ein Scheitern des Aufwachens im Falle einer Anomalie in einer weiteren elektronischen Steuereinheit oder dem Kommunikationsnetz (2) verhindert, **dadurch gekennzeichnet, dass** die Schlafvermeidungseinheit (24) den Zustand der elektronischen Steuereinheit, die die Schlaf/Aufwach-Steuereinheit (10) besitzt, überwacht und im Falle einer Anomalie in der elektronischen Steuereinheit oder dem Kommunikationsnetz (2) die Schlaf/Aufwach-Steuerung der elektronischen Steuereinheit übernimmt und das Schlaf/Aufwach-Anforderungssignal zur weiteren elektronischen Steuereinheit sendet.

2. Elektronische Steuereinheit für ein Fahrzeug nach Anspruch 1, wobei
die Schlafvermeidungseinheit (24) Schlaf ohne eine Schlafanforderung von der Schlaf/Aufwach-Steuereinheit (10) im Falle einer Anomalie in der weiteren elektronischen Steuereinheit oder dem Kommunikationsnetz (2) verhindert.

3. Elektronische Steuereinheit für ein Fahrzeug nach Anspruch 1, wobei
dann, wenn ein Aufwachanforderungssignal empfangen worden ist und das Aufwachen durch die Schlaf/Aufwach-Umschalteinheit (23) abgeschlossen ist, die Schlafvermeidungseinheit (24) eine Aufwachbenachrichtigung mit der weiteren elektronischen Steuereinheit austauscht und dadurch bestimmt, ob die weitere elektronische Steuereinheit normal aufgewacht ist oder nicht.

4. Elektronische Steuereinheit für ein Fahrzeug nach Anspruch 1, wobei
dann, wenn ein Aufwachanforderungssignal empfangen worden ist und das Aufwachen durch die Schlaf/Aufwach-Umschalteinheit (23) abgeschlossen ist, die Schlafvermeidungseinheit eine Aufwachbenachrichtigung mit der weiteren elektronischen Steuereinheit austauscht und dann, wenn eine elektronische Steuereinheit vorhanden ist, die nicht normal aufgewacht ist, ein Aufwachanforderungssignal mindestens zu dieser elektronischen Steuereinheit

5. Elektronische Steuereinheit für ein Fahrzeug nach Anspruch 2, wobei
die Schlafvermeidungseinheit (24) eine Schlafumschaltgenehmigungsbenachrichtigung zur Schlaf/Aufwach-Umschalteinheit (23) ausgibt, wenn ein Schlafanforderungssignal, das von der Schlaf/Aufwach-Steuereinheit gesendet wurde, eine vorgegebene Anzahl von Malen in einer vorgegebenen Zeit empfangen wird.

6. Elektronische Steuereinheit für ein Fahrzeug nach Anspruch 2, wobei
die Schlafvermeidungseinheit (24) auf der Grundlage eines Ergebnisses des Decodierens eines Schlafanforderungssignals, das durch die Schlaf/Aufwach-Steuereinheit (10) codiert wurde, eine Schlafumschaltgenehmigungsbenachrichtigung zur Schlaf/Aufwach-Umschalteinheit (23) ausgibt.

7. Elektronische Steuereinheit für ein Fahrzeug nach Anspruch 2, wobei
die Schlafvermeidungseinheit (24) auf der Grundlage eines Ergebnisses des Bestätigens einer Kennung, die einem Schlafanforderungssignal auf der Grundlage einer vorgegebenen Regel durch die Schlaf/Aufwach-Steuereinheit (10) hinzugefügt wurde, eine Schlafumschaltgenehmigungsbenachrichtigung zur Schlaf/Aufwach-Umschalteinheit (23) ausgibt.

8. Elektronische Steuereinheit für ein Fahrzeug nach Anspruch 2, wobei
dann, wenn ein Schlafanforderungssignal empfangen wird, die Schlafvermeidungseinheit (24) eine Schlafanforderungsempfangsbenachrichtigung mit einer weiteren elektronischen Steuereinheit austauscht und dadurch bestimmt, ob ein Schlaf möglich ist oder nicht.

9. Elektronische Steuereinheit für ein Fahrzeug nach Anspruch 8, wobei
dann, wenn die elektronischen Steuereinheiten, die das Schlafanforderungssignal empfangen, in einer vorgegebenen Anzahl oder mehr vorhanden sind, die Schlafvermeidungseinheit (24) auf der Grundlage der Schlafanforderungsempfangsbenachrichtigung eine Schlafumschaltgenehmigungsbenachrichtigung zur Schlaf/Aufwach-Umschalteinheit (23) ausgibt und dann, wenn die vorgegebene Anzahl nicht erreicht wird, die Schlafvermeidungseinheit (24) eine Schlafumschaltverbotsbenachrichtigung zur Schlaf/Aufwach-Umschalteinheit (23) ausgibt.

10. Elektronische Steuereinheit für ein Fahrzeug nach Anspruch 2, wobei
die Schlafvermeidungseinheit (24) ein Wach-Signal, das einen Normalzustand anzeigt, mit einer weitere elektronischen Steuereinheit austauscht und dadurch bestimmt, ob sich eine weitere elektronische Steuereinheit im Normalzustand befindet oder nicht, und dann, wenn bestimmt wird, dass eine elektronische Steuereinheit vorhanden ist, die sich nicht im Normalzustand befindet, die Schlafvermeidungseinheit ein Aufwachanforderungssignal mindestens zu dieser elektronischen Steuereinheit sendet.

11. Fahrzeugsteuersystem, das mehrere elektronische Steuereinheiten umfasst, die die elektronische Steuereinheit für ein Fahrzeug nach Anspruch 1 und eine weitere elektronische Steuereinheit, die Informationen mit der elektronischen Steuereinheit für ein Fahrzeug über ein Kommunikationsnetz (2) austauscht, enthalten.

12. Fahrzeugsteuersystem nach Anspruch 11, wobei die mehreren elektronischen Steuereinheiten in Cluster unterteilt werden,
mindestens eine der elektronischen Steuereinheiten in jedem Cluster die Schlaf/Aufwach-Steuereinheit (10) enthält und
jede elektronische Steuereinheit in jedem Cluster die Schlaf/Aufwach-Umschalteinheit (23) und die Schlafvermeidungseinheit (24) enthält.

## Revendications

1. Unité de commande électronique pour véhicule qui échange des informations avec une autre unité de commande électronique via un réseau de communication (2),
l'unité de commande électronique pour véhicule comprenant : une unité de passage sommeil/réveil (23) qui dort ou se réveille sur la base d'un signal de demande de sommeil/réveil provenant d'une unité de commande électronique ayant une unité de commande de sommeil/réveil (10) pour commander le sommeil ou le réveil en fonction d'un état de fonctionnement d'un véhicule ; et une unité d'évitement de sommeil (24) qui évite la poursuite du sommeil ou le passage au sommeil lorsqu'une anomalie se produit dans l'autre unité de commande électronique ou dans le réseau de communication (2), dans laquelle
l'unité d'évitement de sommeil (24) empêche l'absence de réveil en cas d'anomalie dans l'autre unité de commande électronique ou le réseau de communication (2), **caractérisée en ce que** l'unité d'évitement de sommeil (24) surveille l'état de l'unité de commande électronique ayant l'unité de commande de sommeil/réveil (10), et en cas d'anomalie dans l'unité de commande électronique ou le réseau de communication (2), prend en charge la commande de sommeil/réveil de l'unité de commande électronique et transmet le signal de demande de sommeil/réveil à l'autre unité de commande électronique.

2. Unité de commande électronique pour véhicule selon la revendication 1, dans laquelle
l'unité d'évitement de sommeil (24) empêche le sommeil sans demande de sommeil de l'unité de commande de sommeil/réveil (10) en cas d'anomalie dans l'autre unité de commande électronique ou le réseau de communication (2).

3. Unité de commande électronique pour véhicule selon la revendication 1, dans laquelle,
après qu'un signal de demande de réveil a été reçu et que le réveil par l'unité de passage sommeil/réveil (23) est terminé, l'unité d'évitement de sommeil (24) échange une notification de réveil avec l'autre unité de commande électronique et détermine ainsi si l'autre unité de commande électronique s'est ou non réveillée normalement.

4. Unité de commande électronique pour véhicule selon la revendication 1, dans laquelle,
après qu'un signal de demande de réveil a été reçu et que le réveil par l'unité de passage sommeil/réveil (23) est terminé, l'unité d'évitement de sommeil (24) échange une notification de réveil avec l'autre unité de commande électronique et, lorsqu'une unité de commande électronique ne s'est pas réveillée normalement, transmet un signal de demande de réveil au moins à cette unité de commande électronique.

5. Unité de commande électronique pour véhicule selon la revendication 2, dans laquelle
l'unité d'évitement de sommeil (24) délivre une notification de permission de passage au sommeil à l'unité de passage sommeil/réveil (23) lorsqu'un signal de demande de sommeil transmis par l'unité de commande de sommeil/réveil est reçu un nombre prédéterminé de fois pendant une durée prédéterminée.

6. Unité de commande électronique pour véhicule selon la revendication 2, dans laquelle
l'unité d'évitement de sommeil (24) délivre une notification de permission de passage au sommeil à l'unité de passage sommeil/réveil (23) sur la base d'un résultat du décodage d'un signal de demande de sommeil codé par l'unité de commande de sommeil/réveil (10).

7. Unité de commande électronique pour véhicule selon la revendication 2, dans laquelle
l'unité d'évitement de sommeil (24) délivre une notification de permission de passage au sommeil à l'unité de passage sommeil/réveil (23) sur la base d'un résultat de la confirmation d'un identificateur ajouté à un signal de demande de sommeil sur la base d'une règle prédéterminée par l'unité de commande de sommeil/réveil (10).

8. Unité de commande électronique pour véhicule selon la revendication 2, dans laquelle,
lorsqu'un signal de demande de sommeil est reçu, l'unité d'évitement de sommeil (24) échange une notification de réception de demande de sommeil avec une autre unité de commande électronique et détermine ainsi si le sommeil est possible ou non.

9. Unité de commande électronique pour véhicule selon la revendication 8, dans laquelle,
si l'unité de commande électronique recevant le signal de demande de sommeil est en un nombre prédéterminé ou plus sur la base de la notification de réception de demande de sommeil, l'unité d'évitement de sommeil (24) délivre une notification de permission de passage au sommeil à l'unité de passage sommeil/ réveil (23) et, si le nombre prédéterminé n'est pas atteint, l'unité d'évitement de sommeil (24) délivre une notification d'interdiction de passage au sommeil à l'unité de passage sommeil/ réveil (23).

10. Unité de commande électronique pour véhicule selon la revendication 2, dans laquelle
l'unité d'évitement de sommeil (24) échange un signal vivant indiquant la normalité avec une autre unité de commande électronique et détermine ainsi si une autre unité de commande électronique est normale ou non, et, s'il est déterminé qu'il existe une unité de commande électronique qui n'est pas normale, l'unité d'évitement de sommeil transmet un signal de demande de réveil au moins à cette unité de commande électronique.

11. Système de commande de véhicule comprenant une pluralité d'unités de commande électronique incluant l'unité de commande électronique pour véhicule selon la revendication 1 et une autre unité de commande électronique qui échange des informations avec l'unité de commande électronique pour véhicule via un réseau de communication (2).

12. Système de commande de véhicule selon la revendication 11, dans lequel
la pluralité d'unités de commande électronique est divisée en groupes,
au moins l'une des unités de commande électronique de chaque groupe inclut l'unité de commande sommeil/réveil (10) et
chaque unité de commande électronique de chaque groupe inclut l'unité de passage sommeil/réveil (23) et l'unité d'évitement de sommeil (24).
